# EUROPEAN PATENT SPECIFICATION

(11) **EP 3 396 050 B1**
(45) Date of publication and mention of the grant of the patent: **23.12.2020**
(21) Application number: 17168686.8
(22) Date of filing: 28.04.2017
(51) Int. Cl.: D06F 34/28, D06F 33/30, A47L 15/42, D06F 101/20, D06F 105/54

(54) **HOUSEHOLD APPLIANCE AND METHOD OF OPERATING A HOUSEHOLD APPLIANCE**
HAUSHALTSGERÄT UND VERFAHREN ZUM BETRIEB DES HAUSHALTSGERÄTS
APPAREIL MÉNAGER ET PROCÉDÉ DE FONCTIONNEMENT ASSOCIÉ

(43) Date of publication of application: 31.10.2018
(73) Proprietor: ELECTROLUX APPLIANCES AKTIEBOLAG, 105 45 Stockholm (SE)
(72) Inventor: QUATTRIN, Paolo, 33080 Porcia (IT)
(74) Representative: Electrolux Group Patents

(56) References cited:
- WO-A1-2009/133024
- WO-A1-2015/096917
- DE-A1- 19 505 485
- US-A1- 2013 077 809

## Description

### Field of the invention

The present invention relates to a household appliance and to a method of operating a household appliance.

### Background

Modern household appliances, such as washing machines, dryers, washer dryers, dish washers, refrigerators, and the like offer a plurality of functions to a user of the household appliance. Household appliances nowadays often comprise user interfaces that include a display, for example a touchscreen, and one or more mechanical input elements, such as buttons, keys, rotary knobs and the like. Such user interface allows the user to control the functions of the household appliance, for example by selecting menu items associated with functions from a menu structure, and furthermore allows the displaying of information on a particular function, for example details of a washing program, a page from a user manual for a particular function, or the progress of a running washing program.

To demonstrate the capabilities of a household appliance to a potential buyer of the household appliance, it is known to equip household appliances with a so called demonstration (or demo) mode in which a user can explore the functions of the household appliance without actually operating the household appliance, in particular without powering up the main loads of the household appliance, such as motors, heaters or pumps. As an example, in the demo mode, the user may select and start a particular washing program, whereupon the household appliance simulates the respective washing program by showing the operating parameters and the progress of the washing program without actually opening water inlets, heating water or running motors to turn the washing machine or dryer drum.

An example of such demonstration mode (or demo mode) is described in the document EP 2 336 837 B1, which provides improvements to such demonstration mode. From this document, it is for example known that such a demo mode can be activated by pushing a particular combination of keys provided on the user interface of the appliance.

From the document DE 195 05 485 A1, it is further known that a programming mode of a household appliance that is provided for service technicians can be entered by simultaneously pushing the buttons "starch" and "pump/spin" while the household appliance is being powered up.

The document US 2013/0077809 A1 describes a washing machine that includes manipulation keys. When a user enters a combination of two or more manipulation keys, a controller enters into a diagnosing mode in which a sound that encodes product information is given out.

Recently, household appliances are equipped with more sophisticated user interfaces, for example by making use of a touchscreen. By means of such touchscreen, a variety of graphical input elements can be offered to the user, and the user may for example select a particular program and adjust parameters of such program by only making use of graphical input elements provided on the touchscreen. The user interface of the household appliance can therefore comprise fewer physical input elements such as buttons, keys, rotary knobs or the like.

A problem arises when such touchscreen is malfunctioning or broken, so that it is no longer possible for a user to select and activate the functions of the household appliance. In such situation, it may furthermore be difficult for a service technician to service the household appliance.

It is thus desirable to improve the usability and in particular the serviceability of the household appliance, while at the same time keeping the complexity of the user interface low. It is particularly desirable to provide a compact user interface that has only a limited number of physical input elements.

### Summary

Accordingly, there is a need to mitigate at least some of the drawbacks mentioned above and to provide an improved user interface of a household appliance. In particular, there is a need for a household appliance that has a user interface comprising only a limited number of physical input elements, while at the same time providing an improved serviceability of the household appliance.

This need is met by the features of the independent claims. The dependent claims describe embodiments of the invention.

According to an embodiment of the invention, a household appliance comprising a controller to control the operation of the household appliance and an input unit providing input elements that are actuatable by a user of the household appliance is provided. The input elements comprise at least a power-off-button that is implemented as a physical input element, wherein the input unit is coupled to the controller. The household appliance is operable in at least a main operating mode and in a service mode in which at least one service function that is not available in the main operating mode is provided to a user of the household appliance. When the household appliance is in a turned on state, the controller operates the household appliance in the service mode upon receiving from the input unit a user input that corresponds to the actuation of one or more input elements according to a first predetermined input sequence. The first predetermined input sequence comprises an actuation of the power-off-button. When the household appliance is in the turned on state, the controller turns off the household appliance upon receiving from the input unit a user input that corresponds to the actuation of the power-off-button if the actuation does not comply with the first predetermined input sequence.

Such household appliance may provide a user interface with only limited number of physical input elements, while maintaining a high degree of serviceability. In particular, the power-off-button can be provided with a double function and can be used to enter the service mode and to turn off the household appliance. Configurations may thus become possible in which the power-off-button (also termed off-button herein) is the only physical button of the user interface besides a touchscreen.

Providing an off-button as a physical input element that is separate from for example a touchscreen has the advantage that the household appliance may be turned off at any time, irrespective of what is displayed on the touchscreen and whether the touchscreen is operational or not. Furthermore, it allows an ergonomic and intuitive operation of the household appliance.

Setting the household appliance into the turned on state means that the household appliance is not only plugged into a power supply, such as a power socket, but is also turned on for example by actuating a respective switch or pressing a respective button to turn on the household appliance. That the input unit is coupled to the controller does not imply that there is a mechanical coupling between the input unit and the controller (although such mechanical coupling may certainly be present in some embodiments), but it is sufficient if a signal communication can take place between the input unit and the controller so that actuation of input elements of the input unit can be detected by the controller. As an example, a wireless connection or an electrical connection between the input unit and the controller may provide such signal communication.

The service function may for example be a function for testing the operability of a component of the household appliance, e.g. a diagnostic function.

In an embodiment, the first predetermined input sequence comprises the actuation of the power-off-button within a predetermined time interval after the household appliance has been turned on. As an example, a user may actuate a button or switch to turn on the household appliance, from which point in time the predetermined time interval may be measured. Such configuration may for example allow the entering of further commands, in particular a command to enter the service mode, by means of the power-off-button. By not turning off the household appliance when the power-off-button is actuated during this time interval, the electronics of the household appliance may furthermore be allowed to synchronize prior to the powering down of the household appliance. The predetermined input sequence may for example comprise the pressing of the power-off-button for a certain number of times or holding of the power-off-button depressed for a certain time within the time interval.

The predetermined time interval may have a length of between about one and about fifteen seconds, preferably between about one and about ten seconds. As an example, the time interval may have a length between two and five seconds for example two or three seconds.

The controller may be configured to measure a time that has elapsed since the household appliance has been turned on, and to not turn off the household appliance if a user input that corresponds to the actuation of the power-off-button is received from the input unit within a predetermined time interval after the household appliance has been turned on. The function of the power-off-button to turn off the household appliance may thus be deactivated within the time interval. The elapsed time may for example to be compared to a threshold and while the elapsed time is smaller than the threshold, the household appliance is not turned off when the power-off-button is actuated.

In an embodiment, the input unit comprises a touchscreen, and the controller is configured to provide input elements in form of graphical input elements on the touchscreen for actuation by a user. The first predetermined input sequence may not comprise the actuation of any such graphical input element. A graphical input element may for example correspond to a menu item of a user menu that is provided on the touchscreen, the meu item been associated with a particular function of the household appliance, or with a sub menu. By not including a graphical input element in the first predetermined input sequence, a user may enter the service mode even when the touchscreen is broken, for example when the touchscreen can no longer display any information or does no longer accept any inputs.

In an embodiment, the power-off-button is an on-off-button. The household appliance is configured to be turned on upon actuation of the on-off-button when in a turned off state. By providing only one button for turning off and turning on the household appliance, the user interface may be made more compact. It should be clear that in other configurations, a separate on-button may be provided for turning on the household appliance.

The first predetermined input sequence may comprise or consist of a pressing of the power-off-button for a predetermined amount of time, a repeated actuation of the power-off-button according to a predetermined sequence and/or the actuation of at least one further physical input element of the input unit. By making use of only the power-off-button in the predetermined input sequence, a compact user interface may be obtained, since no further physical input elements may be required (yet they may certainly be present in some embodiments for providing a user with an ergonomic user interface). By including the actuation of one further physical input element in the first predetermined input sequence, the probability that a user enters the service mode accidentally may be reduced. A physical input element may in particular be an input element that is not provided on a touchscreen. It may have a dedicated mechanism or electrics/electronics to detect the actuation, such as an electrical contact that is physically activated, or other means for detecting actuation, such as in a touch sensitive button. The actuation of a physical input element may also occur by setting a rotary knob to a particular position or similar actions performed by a user.

The further physical input element may for example comprise at least one of a rotary knob and a start button of the input unit. As an example, the first predetermined input sequence may comprise the setting of the rotary knob to a particular position and the combined actuation of the start button and the power-off-button. Again, it is noted that the controller may be configured to enter the service mode only if the actuation takes place within a predetermined time interval after turning on the household appliance, or may be configured to enter the service mode any time when such input sequence is received. The term "button" is not limited to any particular type of button, it may be implemented as a mechanical button, as a key, as a touch sensitive switch, a contact switch, as a soft key or the like. The physical input element may furthermore have one or more different functions, the start button may for example be a start/pause button, and the rotary knob may for example be used to select a particular program, such as a laundry or drying program of the household appliance.

The first predetermined input sequence may comprise a pressing of the power-off-button for the predetermined amount of time within a predetermined time interval after the household appliance has been turned on, or the repeated actuation of the power-off-button according to a predetermined sequence within in a predetermined time interval after the household appliance has been turned on. The possibility to enter the service mode by making use of the power-off-button may thus be restricted to only within the predetermined time interval, so that the risk of an accidental activation of the service mode by a user of the household appliance can be reduced.

Further, by requiring the pressing of the power-off-button for a predetermined amount of time or in combination with a further physical input element, the service mode may be entered at any time during the operation of the household appliance, and the inputting of the first predetermined input sequence may not be restricted to a time interval after turning on the household appliance.

In an embodiment, the first predetermined input sequence comprises or consists of at least one of the following sequences: Pressing the power-off-button simultaneously with a further button of the input unit; pressing the power-off-button when a rotary knob of the input unit is in a predetermined position; pressing the power-off-button and a further button of the input unit in a predetermined sequence; or a combination of such sequences. The further button is in particular a physical input element, i.e. not an input element provided on a touchscreen. It should be clear that such sequence may be combined with any of the other features disclosed herein, in particular the feature that the power-off-button has to be pressed within the predetermined time interval after turning on the household appliance.

In a preferred embodiment, the first predetermined input sequence corresponds to an actuation of the power-off-button in combination with a further physical input element, in particular a further button, within the predetermined time interval.

In a further embodiment, the input unit comprises a touchscreen. The controller is configured to provide input elements in form of graphical input elements on the touchscreen for actuation by a user. The controller is further configured to operate the household appliance in the service mode upon receiving from the input unit a user input that corresponds to the actuation of one or more input elements according to a second predetermined input sequence. The second predetermined input sequence comprises an actuation of one or more of the graphical input elements provided on the touchscreen. In such configuration, the controller is configured to provide two distinct ways of entering the service mode. Accordingly, when the touchscreen is not damaged und functioning normally, a service technician may enter the service mode by making use of the touchscreen. A more comfortable way of entering the service mode may thus be provided.

The second predetermined input sequence may in particular consist of the actuation of plural graphical control elements in the respective sequence. The second predetermined input sequence may thus not comprise the actuation of any physical input element.

The second predetermined input sequence may comprise or consist of the actuation of a sequence of graphical input elements each corresponding to a symbol. The sequence may for example comprise at least three, at least four or at least five symbols, preferably between about three and about twelve symbols, more preferably between three and six symbols. Such symbols may be alphanumerical characters, in particular numbers, letters, other characters or a mixture thereof. The touchscreen may for example display a number pad or a key pad for entering such sequence of symbols. Access to the service mode may thus be restricted to persons having knowledge of the sequence of symbols. It may thus be prevented that a private user enters the service mode.

The controller may be configured to provide in the main operating mode on the touchscreen a menu structure including menu items that are selectable by means of respective graphical input elements. The menu structure may comprise a menu item upon the selection of which the controller queries a user of the household appliance to enter the second predetermined input sequence by means of the touchscreen. Together with the query, the key pad or number pad for entering the sequence of symbols may for example be displayed to the user. A fast and efficient way of entering the service mode can thus be provided to the user, while ensuring that the household appliance does not accidentally enter the service mode.

According to a further embodiment of the present invention, a method of operating a household appliance is provided. The household appliance comprises a controller to control the operation of the household appliance and an input unit providing input elements that are actuatable by a user of the household appliance. The input elements comprise at least a power-off-button that is implemented as a physical input element. The input unit is coupled to the controller. The method comprises the steps of turning on the household appliance; upon receiving from the input unit a user input that corresponds to the actuation of one or more input elements according to a first predetermined input sequence, operating the household appliance in a service mode in which at least one service function that is not available in a main operating mode is provided to a user of the household appliance, wherein the first predetermined input sequence comprises an actuation of the power-off-button; if no user input that corresponds to the actuation of one or more input elements according to the first predetermined input sequence is received, operating the household appliance in the main operating mode; and upon receiving from the input unit a user input that corresponds to the actuation of the power-off-button, turning off the household appliance if that actuation of the power-off-button does not comply with the first predetermined input sequence.

By means of such method, advantages similar to the ones outlined further above with respect to the household appliance may be achieved. The method may be performed by a household appliance that has any of the above described configurations. Furthermore, embodiments of the method may comprise any steps performed by the household appliance or the controller of the household appliance that are described herein.

The household appliance may be a household appliance selected from the group comprising or consisting of a laundry treatment apparatus, a washing machine, a dryer, a washer-dryer and a dishwasher.

In some embodiments of the household appliance and the method, it is an optional feature that the first predetermined input sequence comprises the actuation of the power-off-button. Such embodiments may for example comprise features related the providing of a second way for entering the service mode, in particular by making use of graphical input elements provided on a touch screen and entering a second predetermined input sequence.

It is to be understood that the features mentioned above and those yet to be explained below can be used not only in the respective combinations indicated, but also in other combinations or in isolation, without leaving the scope of the present invention.

### Brief description of the drawings

The forgoing and other features and advantages of the invention will become further apparent from the following detailed description read in conjunction with the accompanying drawings. In the drawings, like reference numerals refer to like elements.
- Fig. 1: is a schematic drawing showing a perspective view of a household appliance according to an embodiment.
- Fig. 2: is a schematic drawing showing a block diagram illustrating a user interface of a household appliance according to an embodiment.
- Fig. 3: is a schematic drawing showing a block diagram of a household appliance according to an embodiment.
- Fig. 4: is a flow diagram illustrating a method of operating a household appliance according to an embodiment.
- Fig. 5: is a flow diagram illustrating a method of operating a household appliance according to an embodiment, which may form part of the method of figure 4.
- Fig. 6: is a schematic drawing showing graphical input elements for selecting functions of a household appliance in accordance with an embodiment.
- Fig. 7: is a schematic drawing showing graphical input elements and a query to input a predetermined input sequence on a touchscreen of an input unit of a household appliance according to an embodiment.
- Fig. 8: is a schematic drawing showing graphical input elements for selecting functions of a household appliance in a service mode of the household appliance.

### Detailed description

In the following, embodiments of the invention will be described with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

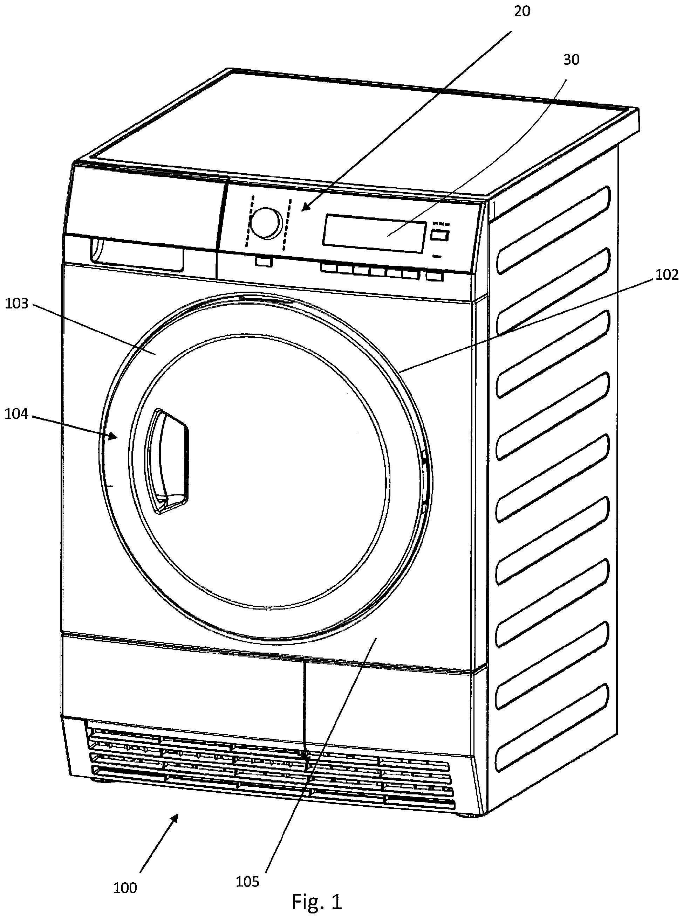

Figure 1 schematically shows a household appliance 100 in accordance with an embodiment of the invention. In the exemplary embodiments described hereinafter, the household appliance 100 is implemented as a laundry treatment apparatus, in particular as a washing machine, a dryer, a washer-dryer, or the like, but it should be clear that the teachings of the present application are similarly applicable to other household appliances. The household appliance 100 has a housing 105, in a front wall of which a loading opening 102 is provided for loading laundry into a drum (not shown) disposed inside the housing 105. The loading door 103 is provided for closing the loading opening 102, and the door 103 or a tub located inside the housing 105 can be provided with a gasket to provide sealing of the loading opening 102. Loading door 103 has a handle 104 for opening and closing the door 103. At the front side or an upper side of the household appliance 100, an user interface 20 is provided that in example of figure 1 comprises an input unit 30 that can include a touchscreen and several physical input elements, such as buttons, keys, rotary knobs and the like. An input element may also be termed operating element or control element. Household appliance 100 may furthermore comprise any other components that are common to the particular implementation of the household appliance 100, such as a drum, a motor, a pump and a drawer for the supply of a detergent when implemented as a washing machine, or heating elements, a compressor, air inlets and outlets and the like when implemented as a dryer, only to name a few.

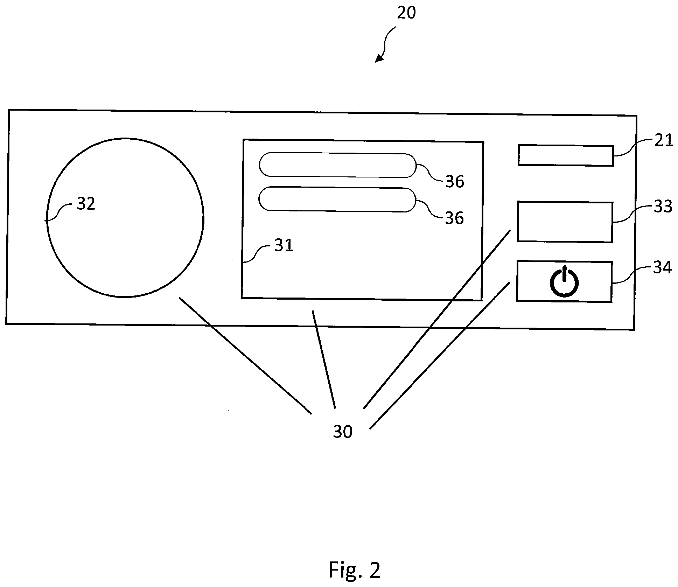

Figure 2 illustrates schematically an exemplary configuration of the user interface 20 that can be employed in the household appliance 100 of figure 1. The input unit 30 comprises a touchscreen 31, a rotary knob 32, and physical buttons or keys 33 and 34. In the example of Figure 2, input element 33 is a start/pause button, and input element 34 is a power-off-button in form of an on/off-button. User interface 20 may comprise further elements, such as additional physical input elements, additional display elements, such as a LED 21, and other elements that are commonly found on user interfaces of household appliances. In operation, a user may for example press the on/off button 34 to switch on the household appliance 100, select on the touchscreen 31 a particular function, such as a laundry program, and start the laundry program by actuating the start/pause button 33. In particular, the touchscreen 31 may be used to display graphical input elements that can be actuated by a user to select and activate a particular function of household appliance 100. Such functions may be provided as menu items within a menu structure, as explained in more detail further below.

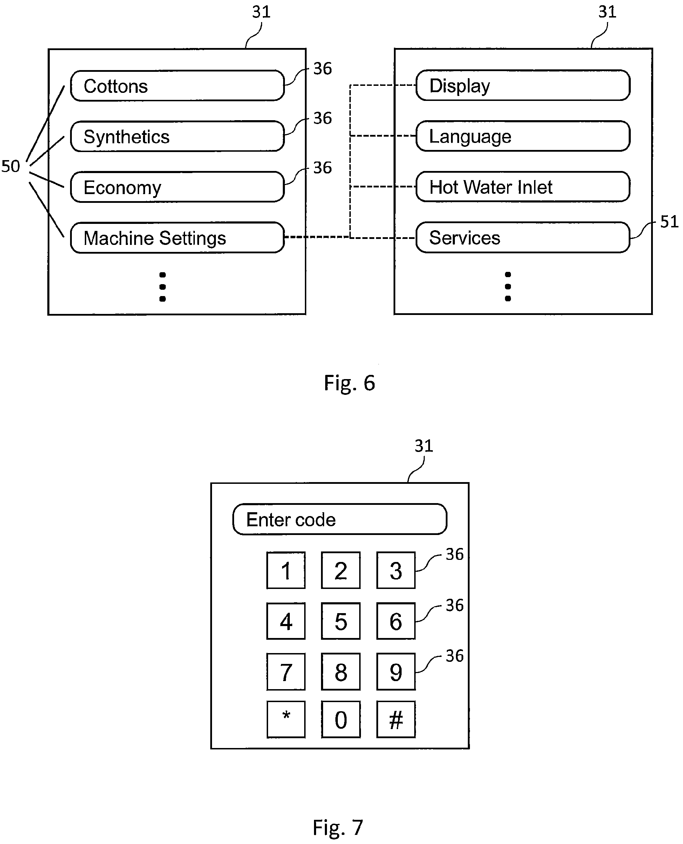

By means of the touchscreen 31, a user may select functions of the household appliance, may adjust parameters of the household appliance, may retrieve information related to the operation of the household appliance and may performed any other actions that are common to the controlling of a household appliance by means of a touchscreen. As an example, a menu structure comprising menu items may be displayed to a user of the household appliance 100, as illustrated in figure 6. The touchscreen 31 may provide respective graphical input elements 36, by actuation of which the user can select the respective menu item. Upon such actuation, an associated function 50 of the household appliance may be selected or activated, a parameter of the household appliance may be changed or a sub menu of the menu structure may be entered, as illustrated on the right hand side of figure 6.

In the embodiment of figure 2, the physical input element 34 is a power-off-button in form of an on/off-button. It should be clear that in other embodiments, physical input element 34 may be only a power-off-button, and an on-button may be provided separately. During normal operation of the household appliance 100, i.e. in a main operating mode of the household appliance, the actuation of the button 34 turns on the household appliance when the household appliance is connected to the power supply and in a turned off state. Similarly, when connected to the power supply and in a turned on state, actuation of the button 34 causes the household appliance 100 to turn off. A turned off state may for example be a standby state in which most consumers of the household appliance 100 do not receive electrical power, and only few selected components of the household appliance 100 are active, such as the button 34 for receiving an user command to turn on the household appliance.

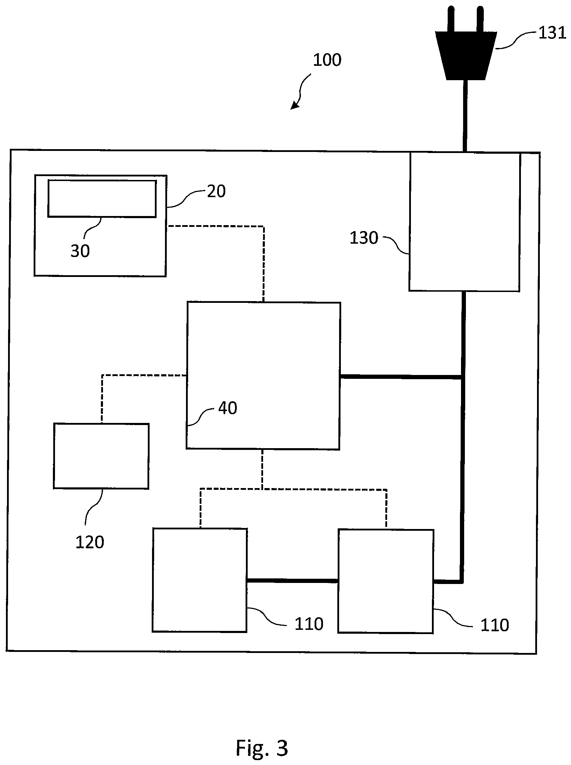

Figure 3 is block diagram illustrating the components of an embodiment of a household appliance 100. The household appliance shown in figure 1 may for example comprise the respective components illustrated in figure 3. Household appliance 100 comprises a controller 40 that controls the operation and the components of the household appliance 100. Controller 40 is implemented as an electrical circuit that may comprise a microprocessor, a signal processor, a FPGA (field programmable gate array), an ASIC (application-specific integrated circuit) or any other circuit suitable to control the operation of the household appliance 100. Controller 40 may comprise further components that are common to a controller, such as a memory, input/output interfaces for operating components and for communicating with sensors, display elements, input elements and other components of the household appliance 100, transmitters and receivers for sending and receiving signals, digital to analog and analog to digital converters and the like. Controller 40 is coupled to user interface 20 including the input unit 30, which may be configured as described with respect to figure 2. The coupling may be provided by an electrical connection, such as a cable having one or more conductors, or a wireless connection. Parts of the user interface 20 and the controller 40 may be located remote from each other, and other parts may be located adjacent to each other or may even be integrated on the same circuit board. Household appliance 100 includes a power supply unit 130 that can be connected to a power supply by means of the power plug 131, such as to a power network, for example by plugging the plug 131 into a power socket or power outlet. Power supply unit 130 supplies electrical power to the components of household appliance 100, such as to main loads 110 and to the controller 40. Power supply unit 130 may provide power transformation in order to provide electrical power at a lower voltage to the controller 40, while main loads 110 may be operated at a higher voltage, in particular at the power grid voltage. The power loads or main loads 110 of household appliance 100 may for example comprise a heating element for heating water, a pump for pumping water, an electrical motor for rotating a drum in a washer or washer-dryer application, or may comprise a compressor or a heating element for heating air in a dryer application.

Household appliance 100 further comprises sensors 120, which may for example sense a temperature, a water level, the presence of water, or the rotational speed of a motor. Controller 40 is coupled to the sensors 120, for example by a respective electrical connection. Sensors 120 may be provided at different locations and may be associated with different components of the household appliance 100, for example for measuring the temperature of a medium heated by a heating element, for measuring the rotational speed of a drum driven by a motor or the like.

It should be clear that the household appliance 100 may comprise further elements that are common to the particular implementation of the household appliance 100, as already indicated further above. For reasons of clarity and conciseness, such elements are not explained herein in further detail.

The household appliance 100 has a main operating mode that is commonly used by a private user of the household appliance 100. As an example, when the household appliance 100 is connected to the power grid and the on/off button 34 shown in figure 2 is pressed by a user of the household appliance, the controller 40 starts operation of the household appliance 100 and enters the main operating mode. In such main operating mode, functions 50 of the household appliance 100 are provided to the user for selection by graphical input elements 36 on the touchscreen 31, illustrated in figure 6. By selecting the graphical input element designated "cottons", the controller 40 may provide the user with additional information on a respective laundry program on touchscreen 31 and may allow the changing of parameters of such laundry program. Upon subsequent actuation of the start/pause button 33, the controller 40 may cause the household appliance 100 to perform the respective laundry program. In the course of such laundry program, the controller 40 controls the operation of the main loads 110, for example the switching on and off of heating elements, the operation of a motor to rotate drum at a certain speed and the like. Accordingly, when a user selects functions, such as washing or drying programs in the main operating mode of the household appliance, the controller 40 operates the main loads 110.

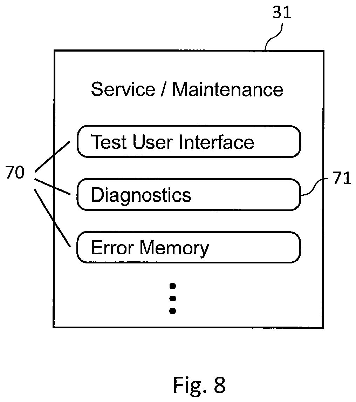

The controller 40 is furthermore configured to operate the household appliance 100 in a service mode. In the service mode, the controller may provide to the user of the household appliance a menu structure via touchscreen 31 which comprises functions 70 that are not available in the menu structure of the main operating mode. Such functions 70 are exemplarily illustrated in figure 8 and may include test functions, for example for testing the user interface, diagnostic functions 71 for testing particular components of the household appliance 100, functions to retrieve messages in an error memory of the household appliance 100 and the like. In particular, the service mode comprises functions the selection of which operates the household appliance 100 differently than the selection of any of the functions provided in the main operating mode. The activation of a diagnostic function may for example comprise a selective activation of a component such as a valve, one or more pumps, one or more heating elements, displays or display icons and the like. In the service mode, by selective activation of specific components, it becomes possible for a service technician to find out if one of the components is defective. Such selective activation of components is not possible by the functions provided in the main operating mode.

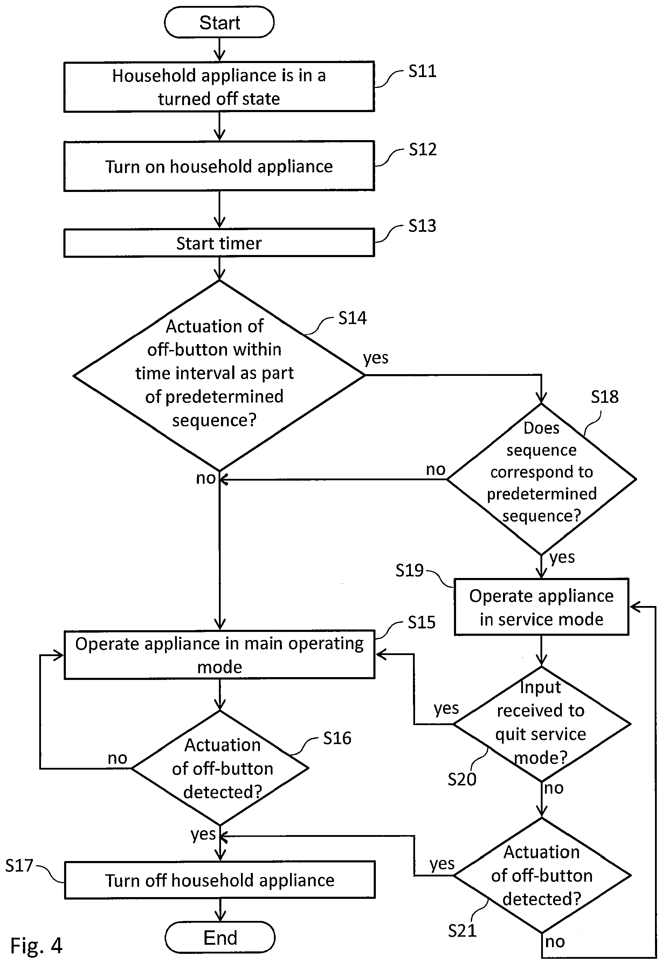

One way of entering the service mode of the household appliance 100 is illustrated in the flow diagram of figure 4. In step S11, the household appliance is in a turned off state, but is connected to a power supply, for example is plugged into a power socket by means of the plug 131. In step S12, the household appliance is turned on. In some embodiments, this may occur by actuating the on/off-button 34 illustrated in figure 2. In other embodiments, this may occur by actuating a dedicated on-button, or by connecting the household appliance to the power supply. Upon turning on the household appliance, a timer is started in step S13.

In step S14, it is checked if an actuation of the off-button occurs within a predetermined time interval. The expiry of the time interval can be determined by the timer started in step S13. If no such actuation of the off-button can be detected, the household appliance operates in the main operating mode in step S15.

If such actuation of the off-button is detected, the household appliance is not turned off, but it is checked in step S18 if the actuation of the off-button is part of a sequence that corresponds to a fist predetermined input sequence.

The first predetermined input sequence may comprise only an actuation of the off-button, or it may comprise the actuation of the off-button in combination with other input elements, in particular with other physical input elements such as the rotary knob 32, the start/pause button 33 or a combination thereof. In some embodiments, the first predetermined input sequence comprises holding the off-button depressed for a predetermined amount of time or a repeated pressing of the off-button. The sequence may also comprise a combination of such actions, such as pressing the off-button for certain amount of time followed by a certain number of short actuations of the off-button. An example for a combined actuation of physical input elements is holding the off-button depressed while pressing another physical input element, such as the start/pause button 33. Additionally or alternatively, the rotary knob 32 may be set to a particular position as part of the first predetermined input sequence. It should be clear that the above mentioned sequences may be combined in any desired way.

Accordingly, if the off-button is depressed within the time interval, but the actuation of the off-button does not comply with the first predetermined input sequence, the household appliance operates in the main operating mode in step S15. On the other hand, if it is determined in step S18 that the actuation of the off-button occurs as part of the predetermined input sequence (or equals the predetermined input sequence), the household appliance is operated in the service mode in step S19.

In the service mode, the controller provides to a user of the household appliance functions 70 that are not available in the main operating mode of the household appliance. In particular, such functions may not be found in a menu structure provided to the user of the household appliance in the main operating mode. As outlined above, such functions 70 can comprise diagnostic functions, including test functions and reporting functions. Figure 8 illustrates such menu items that are provided to the user on the touchscreen 31 in the service mode for selecting the functions 70, including the diagnostic function 71.

As a particular example, upon selection of the function "test user interface" of figure 9, the controller may check operation of the LED 21, may check a buzzer comprised in the user interface 20, may check correct operation of the touchscreen 31, in particular of the display comprised in the touchscreen 31, and may subsequently provide on the touchscreen 31 a summary of the test results. Upon selection of the "diagnostics" function 71, the service technician may be provided with a possibility to run a diagnostic program for a particular washing program. The water temperature, the water level and the spin speed used in such program may for example be tested by activating the respective components, and a summary of the diagnostic results may be provided on the touchscreen 31. Upon selection of the "error memory" function, the controller may retrieve and display messages stored in an error memory of the household appliance 100.

When the household appliance 100 is operated in the service mode, the service menu may also comprise an item to quit the service mode. If the controller receives a respective user input that corresponds to a command to quit the service mode (step S20), it operates the household appliance in the main operating mode (step S15).

After the predetermined time interval has lapsed, the normal function of the off-button is restored by the controller 40. In particular, if the controller receives a user input corresponding to an actuation of the off-button, the controller 40 turns off the household appliance.

Accordingly, when operating in the main operating mode in step S15 and an actuation of the off-button is detected in step S16, the household appliance is turned off (step S17). The off-button may have a similar functionality in the service mode. When detecting the actuation of the off-button in the service mode in step S21, the controller turns off the household appliance in step S17.

As can be seen from the above description, embodiments of the household appliance and the method allow a user to enter the service mode without making use of the touchscreen 31. In particular, by means of only one physical input element (the power-off-button) or two physical input elements (an on-button and an off-button), household appliance 100 can be turned on and off and the service mode can be entered without the need to use the touchscreen 31.

It should be clear that the order of the steps of the method illustrated in figure 4 may be changed. Furthermore, some of the steps illustrated in figure 4 are optional. As an example, step S20 is optional, and the service mode may only be left by actuating the off-button.

As a further example, steps S13 and S14 are optional. The first predetermined input sequence may for example be entered any time when the household appliance is operating in the main operating mode. Such sequence may for example comprise the actuation of the off-button in combination with another physical input element. As an example, the start/pause button 33 may be held depressed and the off-button may be actuated once or in accordance with a predetermined sequence.

In a preferred embodiment, the controller is configured to provide a second way of entering the service mode. The controller 40 is in particular configured to operate the household appliance 100 in the service mode when receiving from the input unit 30 a user input that corresponds to a second predetermined input sequence. The second predetermined input sequence comprises the actuation of one or more graphical input elements 36 provided on the touchscreen 31.

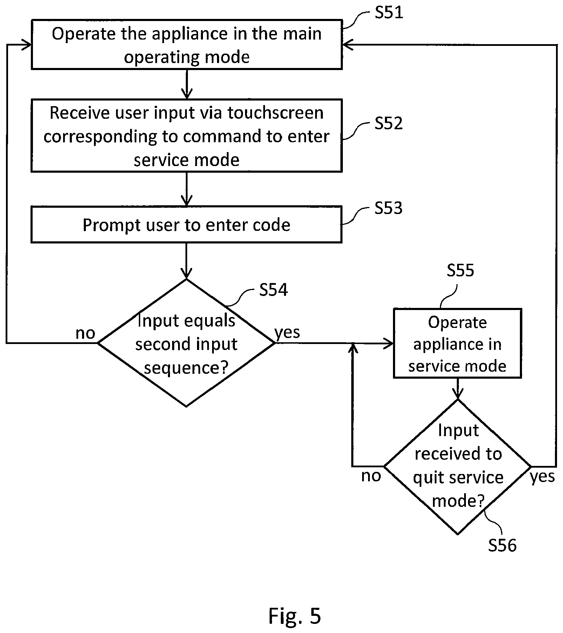

Figure 5 is a flow diagram schematically illustrating steps of a method of entering the service mode according to such second way. In step S51, the household appliance is operated in the main operating mode. Starting point may thus be the step S15 of figure 4. In step S52, the controller 40 receives a user input via the touchscreen 31 that corresponds to a command to enter the service mode.

As an example, in the main operating mode, the controller 40 may provide to the user on the touchscreen 31 a menu structure with menu items corresponding to functions 50, which is exemplarily illustrated on the left hand side of figure 6. Items of the menu structure can be selected and activated by respective graphical input elements 36. Upon activation of the menu item "machine settings", the controller may provide the submenu illustrated on the right hand side of figure 6 on the touchscreen 31. The submenu comprises the menu item 51 termed "services". The user may for example input the command to enter the service mode by actuating the menu item 51 on the touchscreen 31. It should be clear that such command may be entered in a different way, for example by providing a different menu item, by arranging the menu item 51 in a different way within the menu structure of the main operating mode, or by providing a dedicated service button separate from the touchscreen 31.

Turning back to figure 5, upon receiving the command in step S52, the controller 40 prompts the user to enter a code in step S53. The controller may for example display to the user on the touchscreen 31 a query as illustrated in figure 7, together with graphical input elements 36 for entering the code.

In step S54, it is checked by the controller 40 if the input equals a second predetermined input sequence. Such second sequence may for example be a sequence of a certain number of symbols, in particular alphanumerical characters. Preferably, the second sequence comprises between six and ten alphanumerical characters, more preferably between three and five. The second sequence may for example consist of numbers, letters, combinations of numbers and letters and may further comprise symbols that are commonly found on key pads, or commonly used in characters sets. As shown in figure 7, the graphical input elements may be provided to the user inform of a number pad, or in another suitable form, such as a key pad or the like.

Preferably, the second predetermined input sequence consists of a sequence of actuations of graphical input elements on the touchscreen 31. Yet certainly, embodiments are conceivable in which one or more physical input elements are additionally actuated as part of the second predetermined input sequence.

If the user input corresponds to the second predetermined sequence in step S54, the controller operates the appliance in the service mode in step S55. Operating the household appliance in the service mode is described further above with respect to step S19 of figure 4, and the above explanations are equally applicable to step S55 of figure 5. Similar to step S20 of figure 4, the user may be provided with a command to quit the service mode, and if a respective input is received (step S56), the controller causes the household appliance to operate in the main operating mode (step S51).

If in step S54, the user input does not correspond to the second predetermined input sequence, the service mode is not entered and the household appliance continues to operate in the main operating mode in step S51.

As indicated above, the method illustrated in figure 5 may form part of the method illustrated in figure 4, and may thus comprise the additional steps explained with respect to figure 4. By means of such method, entering the service mode is facilitated by allowing the use of the touchscreen to enter the service mode. If the touchscreen is damaged or broken, the service mode can still be entered by making use of the method explained with respect to figure 4, i.e. by actuation of the off-button in accordance with the first predetermined input sequence. As these two distinct possibilities for entering the service mode are provided, it is still sufficient to provide only a touchscreen and a single on/off-button as input elements of the user interface 20. A compact user interface can thus be achieved while providing an improved serviceability of the household appliance 100.

Accordingly, in some configurations, the input unit 30 only consists of the touchscreen 31 and the on/off-button 34. In other configurations, the input unit 30 comprises further input elements, in particular the start/pause button 33 and the rotary knob 32.

While specific embodiments are disclosed herein, various changes and modifications can be made without departing from the scope of the appended claims.

### LIST OF REFERENCE SIGNS

- 100: household appliance
- 102: loading opening
- 103: door
- 104: handle
- 105: housing
- 110: main load
- 120: sensor
- 130: power supply unit
- 131: plug

- 20: user interface
- 21: LED
- 30: input unit
- 31: touchscreen
- 32: rotary knob
- 33: start/pause button
- 34: power-off-button
- 36: graphical input element
- 40: controller
- 50: functions of main operating mode
- 51: menu item
- 70: functions of service mode
- 71: diagnostic function
- S11-S21: method steps
- S51-S56: method steps

## Claims

1. A household appliance, comprising:
- a controller (40) to control the operation of the household appliance (100); and
- an input unit (30) providing input elements (31, 32, 33, 34) that are actuatable by a user of the household appliance (100), the input elements comprising at least a power-off-button (34) that is implemented as a physical input element, wherein the input unit is coupled to the controller (40);
wherein the household appliance (100) is operable in at least a main operating mode and in a service mode in which at least one service function (71) that is not available in the main operating mode is provided to a user of the household appliance (100),
**characterized in that** the controller (40) is configured to:
- when the household appliance (100) is in a turned on state, operate the household appliance (100) in the service mode upon receiving from the input unit (30) a user input that corresponds to the actuation of one or more input elements (31, 32, 33, 34) according to a first predetermined input sequence, wherein the first predetermined input sequence comprises an actuation of the power-off-button (34);
- when the household appliance (100) is in the turned on state, turn off the household appliance (100) upon receiving from the input unit (30) a user input that corresponds to the actuation of the power-off-button (34) if said actuation does not comply with the first predetermined input sequence.

2. The household appliance according to claim 1, wherein the first predetermined input sequence comprises the actuation of the power-off-button (34) within a predetermined time interval after the household appliance (100) has been turned on.

3. The household appliance according to claim 1 or 2, wherein the controller is further configured to measure a time that has elapsed since the household appliance (100) has been turned on, and to not turn off the household appliance (100) if a user input that corresponds to the actuation of the power-off-button (34) is received from the input unit within a predetermined time interval after the household appliance (100) has been turned on.

4. The household appliance according to any of the preceding claims, wherein the input unit comprises a touchscreen (31), wherein the controller (40) is configured to provide input elements in form of graphical input elements (36) on the touchscreen (31) for actuation by a user, and wherein the first predetermined input sequence does not comprise the actuation of any such graphical input element (36).

5. The household appliance according to any of the preceding claims, wherein the power-off-button (34) is an on-off-button, wherein the household appliance (100) is configured, when in a turned off state, to be turned on upon actuation of the on-off-button.

6. The household appliance according to any of the preceding claims, wherein the first predetermined input sequence comprises or consists of a pressing of the power-off-button (34) for a predetermined amount of time, a repeated actuation of the power-off-button (34) according to a predetermined sequence and/or the actuation of at least one further physical input element (32, 33) of the input unit (30).

7. The household appliance according to claim 6, wherein the first predetermined input sequence comprises the pressing of the power-off-button (34) for the predetermined amount of time within a predetermined time interval after the household appliance (100) has been turned on, or the repeated actuation of the power-off-button (34) according to the predetermined sequence within a predetermined time interval after the household appliance (100) has been turned on.

8. The household appliance according to claim 6 or 7, wherein the at least one further physical input element (32, 33) comprises at least one of a rotary knob (32) and a start button (33) of the input unit (30).

9. The household appliance according to any of the preceding claims, wherein the first predetermined input sequence comprises or consists of at least one of the following sequences: pressing the power-off-button (34) in combination with a further button (33) of the input unit (30); pressing the power-off-button (34) when a rotary knob (32) of the input unit (30) is in a predetermined position; pressing the power-off-button (34) and a further button (33) of the input unit (30) in a predetermined sequence; or a combination of such sequences.

10. The household appliance according to any of the preceding claims, wherein the input unit (30) comprises a touchscreen (31), wherein the controller (40) is configured to provide input elements in form of graphical input elements (36) on the touchscreen (31) for actuation by a user, and wherein the controller (40) is further configured to operate the household appliance (100) in the service mode upon receiving from the input unit (30) a user input that corresponds to the actuation of one or more input elements (31, 32, 33, 34, 36) according to a second predetermined input sequence, wherein the second predetermined input sequence comprises an actuation of one or more of said graphical input elements (36).

11. The household appliance according to claim 10, wherein the second predetermined input sequence consists of the actuation of plural graphical control elements (36) in the respective sequence.

12. The household appliance according to claim 10 or 11, wherein the second predetermined input sequence comprises or consists of the actuation of a sequence of graphical input elements (36) each corresponding to a symbol, wherein the sequence preferably comprises at least three, at least four or at least five symbols.

13. The household appliance according to any of claims 10-12, wherein the controller (40) is further configured to provide in the main operating mode on the touchscreen (31) a menu structure including menu items that are selectable by means of respective graphical input elements (36), wherein the menu structure comprises a menu item (51) upon the selection of which the controller (40) queries a user of the household appliance (100) to enter the second predetermined input sequence by means of the touchscreen (31).

14. A method of operating a household appliance, wherein the household appliance (100) comprises a controller (40) to control the operation of the household appliance (100) and an input unit (30) providing input elements (31, 32, 33, 34) that are actuatable by a user of the household appliance (100), wherein the input elements comprise at least a power-off-button (34) that is implemented as a physical input element and wherein the input unit (30) is coupled to the controller (40), wherein the method comprises the step of:
- turning on the household appliance (100);
**characterized in that** the method further comprises the steps of:
- upon receiving from the input unit (30) a user input that corresponds to the actuation of one or more input elements (31, 32, 33, 34) according to a first predetermined input sequence, operating the household appliance (100) in a service mode in which at least one service function (71) that is not available in a main operating mode is provided to a user of the household appliance (100), wherein the first predetermined input sequence comprises an actuation of the power-off-button (34);
- if no user input that corresponds to the actuation of one or more input elements (31, 32, 33, 34) according to the first predetermined input sequence is received, operating the household appliance (100) in the main operating mode; and
- upon receiving from the input unit (30) a user input that corresponds to the actuation of the power-off-button (34), turning off the household appliance if said actuation of the power-off-button (34) does not comply with the first predetermined input sequence.

15. The method according to claim 14, wherein the method is performed by a household appliance configured in accordance with any of claims 1-13.

## Patentansprüche

1. Haushaltsgerät, das Folgendes umfasst:
- eine Steuerung (40) zum Steuern des Betriebs des Haushaltsgeräts (100); und
- eine Eingabeeinheit (30), die Eingabeelemente (31, 32, 33, 34) bereitstellt, die von einem Benutzer des Haushaltsgeräts (100) betätigt werden können, wobei die Eingabeelemente wenigstens eine Ausschalttaste (34) umfassen, die als ein physisches Eingabeelement verwirklicht ist, wobei die Eingabeeinheit mit der Steuerung (40) gekoppelt ist;
wobei das Haushaltsgerät (100) wenigstens in einer Hauptbetriebsart und einer Wartungsbetriebsart, in der wenigstens eine Wartungsfunktion (71), die in der Hauptbetriebsart nicht verfügbar ist, für einen Benutzer des Haushaltsgeräts (100) bereitgestellt wird, betrieben werden kann,
**dadurch gekennzeichnet, dass** die Steuerung (40) konfiguriert ist, die folgenden Schritte auszuführen:
- wenn das Haushaltsgerät (100) in einem eingeschalteten Zustand ist, Betreiben des Haushaltsgeräts (100) in der Wartungsbetriebsart beim Empfangen einer Benutzereingabe von der Eingabeeinheit (30), die der Betätigung eines oder mehrerer Eingabeelemente (31, 32, 33, 34) in Übereinstimmung mit einer ersten vorbestimmten Eingabeabfolge entspricht, wobei die erste vorbestimmte Eingabeabfolge eine Betätigung der Ausschalttaste (34) umfasst;
- wenn sich das Haushaltsgerät (100) in dem eingeschalteten Zustand befindet, Ausschalten des Haushaltsgeräts (100) beim Empfangen einer Benutzereingabe von der Eingabeeinheit (30), die der Betätigung der Ausschalttaste (34) entspricht, falls die Betätigung nicht mit der ersten vorbestimmten Eingabeabfolge übereinstimmt.

2. Haushaltsgerät nach Anspruch 1, wobei die erste vorbestimmte Eingabeabfolge die Betätigung der Ausschalttaste (34) innerhalb einer vorbestimmten Zeitspanne umfasst, nachdem das Haushaltsgerät (100) eingeschaltet worden ist.

3. Haushaltsgerät nach Anspruch 1 oder 2, wobei die Steuerung ferner konfiguriert ist, eine Zeit zu messen, die seit dem Einschalten des Haushaltsgeräts (100) verstrichen ist, und das Haushaltsgerät (100) nicht auszuschalten, falls eine Benutzereingabe, die der Betätigung der Ausschalttaste (34) entspricht, innerhalb einer vorbestimmten Zeitspanne seit dem Einschalten des Haushaltsgeräts (100) von der Eingabeeinheit empfangen wird.

4. Haushaltsgerät nach einem der vorhergehenden Ansprüche, wobei die Eingabeeinheit einen Berührungsbildschirm (31) umfasst, wobei die Steuerung (40) konfiguriert ist, Eingabeelemente in der Form von grafischen Eingabeelementen (36) auf dem Berührungsbildschirm (31) für die Betätigung durch einen Benutzer bereitzustellen, und wobei die erste vorbestimmte Eingabeabfolge die Betätigung eines derartigen grafischen Eingabeelements (36) nicht umfasst.

5. Haushaltsgerät nach einem der vorhergehenden Ansprüche, wobei die Ausschalttaste (34) eine Ein-Aus-Taste ist, wobei das Haushaltsgerät (100) konfiguriert ist, dann, wenn es sich in einem ausgeschalteten Zustand befindet, bei der Betätigung der Ein-Aus-Taste eingeschaltet zu werden.

6. Haushaltsgerät nach einem der vorhergehenden Ansprüche, wobei die erste vorbestimmte Eingabeabfolge das Drücken der Ausschalttaste (34) für eine vorbestimmte Zeitdauer, eine wiederholte Betätigung der Ausschalttaste (34) in Übereinstimmung mit einer vorbestimmten Abfolge und/oder die Betätigung wenigstens eines weiteren physischen Eingabeelements (32, 33) der Eingabeeinheit (30) umfasst oder daraus besteht.

7. Haushaltsgerät nach Anspruch 6, wobei die erste vorbestimmte Eingabeabfolge das Drücken der Ausschalttaste (34) für die vorbestimmte Zeitdauer innerhalb einer vorbestimmten Zeitspanne nach dem Einschalten des Haushaltsgeräts (100) oder die wiederholte Betätigung der Ausschalttaste (34) in Übereinstimmung mit der vorbestimmten Abfolge innerhalb einer vorbestimmten Zeitspanne nach dem Einschalten des Haushaltsgeräts (100) umfasst.

8. Haushaltsgerät nach Anspruch 6 oder 7, wobei das wenigstens eine weitere physische Eingabeelement (32, 33) einen Drehknopf (32) und/oder eine Starttaste (33) der Eingabeeinheit (30) umfasst.

9. Haushaltsgerät nach einem der vorhergehenden Ansprüche, wobei die erste vorbestimmte Eingabeabfolge wenigstens eine der folgenden Abfolge umfasst oder daraus besteht: Drücken der Ausschalttaste (34) in Verbindung mit einer weiteren Taste (33) der Eingabeeinheit (30); Drücken der Ausschalttaste (34), wenn ein Drehknopf (32) der Eingabeeinheit (30) in einer vorbestimmten Position ist; Drücken der Ausschalttaste (34) und einer weiteren Taste (33) der Eingabeeinheit (30) in einer vorbestimmten Abfolge; oder eine Kombination derartiger Abfolgen.

10. Haushaltsgerät nach einem der vorhergehenden Ansprüche, wobei die Eingabeeinheit (30) einen Berührungsbildschirm (31) umfasst, wobei die Steuerung (40) konfiguriert ist, Eingabeelemente in Form von grafischen Eingabeelementen (36) auf dem Berührungsbildschirm (31) für eine Betätigung durch einen Benutzer bereitzustellen, und wobei die Steuerung (40) ferner konfiguriert ist, das Haushaltsgerät (100) beim Empfangen einer Benutzereingabe von der Eingabeeinheit (30), die der Betätigung eines oder mehrerer Eingabeelemente (31, 32, 33, 34, 36) in Übereinstimmung mit einer zweiten vorbestimmten Eingabeabfolge entspricht, in der Wartungsbetriebsart zu betreiben, wobei die zweite vorbestimmte Eingabeabfolge eine Betätigung eines oder mehrerer grafischer Eingabeelemente (36) umfasst.

11. Haushaltsgerät nach Anspruch 10, wobei die zweite vorbestimmte Eingabeabfolge aus der Betätigung mehrerer grafischer Steuerelemente (36) in der entsprechenden Abfolge besteht.

12. Haushaltsgerät nach Anspruch 10 oder 11, wobei die zweite vorbestimmte Eingabeabfolge die Betätigung einer Abfolge von grafischen Eingabeelemente (36), von denen jedes einem Symbol entspricht, umfasst oder daraus besteht, wobei die Abfolge vorzugsweise wenigstens drei, wenigstens vier oder wenigstens fünf Symbole umfasst.

13. Haushaltsgerät nach einem der Ansprüche 10-12, wobei die Steuerung (40) ferner konfiguriert ist, in der Hauptbetriebsart auf dem Berührungsbildschirm (31) eine Menüstruktur bereitzustellen, die Menüpunkte umfasst, die mittels entsprechender grafischer Eingabeelemente (36) ausgewählt werden können, wobei die Menüstruktur einen Menüpunkt (51) umfasst, bei dessen Auswahl die Steuerung (40) einen Benutzer des Haushaltsgeräts (100) auffordert, die zweite vorbestimmte Eingabeabfolge mittels des Berührungsbildschirms (31) einzugeben.

14. Verfahren zum Betreiben eines Haushaltsgeräts, wobei das Haushaltsgerät (100) eine Steuerung (40) zum Steuern des Betriebs des Haushaltsgeräts (100) und eine Eingabeeinheit (30), die Eingabeelemente (31, 32, 33, 34) bereitstellt, die von einem Benutzer des Haushaltsgeräts (100) betätigt werden können, umfasst, wobei die Eingabeelemente wenigstens eine Ausschalttaste (34) umfassen, die als ein physisches Eingabeelement verwirklicht ist, und wobei die Eingabeeinheit (30) mit der Steuerung (40) gekoppelt ist, wobei das Verfahren die folgenden Schritte umfasst:
- Einschalten des Haushaltsgeräts (100);
**dadurch gekennzeichnet, dass** das Verfahren ferner die folgenden Schritte umfasst:
- beim Empfangen einer Benutzereingabe von der Eingabeeinheit (30), die der Betätigung von einem oder mehreren Eingabeelementen (31, 32, 33, 34) in Übereinstimmung mit einer ersten vorbestimmten Eingabeabfolge entspricht, Betreiben des Haushaltsgeräts (100) in einer Wartungsbetriebsart, in der wenigstens eine Wartungsfunktion (71), die in einer Hauptbetriebsart nicht verfügbar ist, für einen Benutzer des Haushaltsgeräts (100) bereitgestellt wird, wobei die erste vorbestimmte Eingabeabfolge eine Betätigung der Ausschalttaste (34) umfasst;
- falls keine Benutzereingabe, die der Betätigung eines oder mehrerer Eingabeelemente (31, 32, 33, 34) in Übereinstimmung mit der ersten vorbestimmten Eingabeabfolge entspricht, empfangen wird, Betreiben des Haushaltsgeräts (100) in der Hauptbetriebsart; und
- beim Empfangen einer Benutzereingabe von der Eingabeeinheit (30), die der Betätigung der Ausschalttaste (34) entspricht, Ausschalten des Haushaltsgeräts, falls die Betätigung der Ausschalttaste (34) nicht mit der ersten vorbestimmten Eingabeabfolge übereinstimmt.

15. Verfahren nach Anspruch 14, wobei das Verfahren durch ein Haushaltsgerät durchgeführt wird, das nach einem der Ansprüche 1-13 konfiguriert ist.

## Revendications

1. Appareil ménager, comprenant :
- un contrôleur (40) pour contrôler le fonctionnement de l'appareil ménager (100) ; et
- une unité d'entrée (30) fournissant des éléments d'entrée (31, 32, 33, 34) qui peuvent être actionnés par un utilisateur de l'appareil ménager (100), les éléments d'entrée comprenant au moins un bouton de mise hors tension (34) qui est mis en œuvre en tant qu'élément d'entrée physique, où l'unité d'entrée est couplée au contrôleur (40) ;
où l'appareil ménager (100) peut fonctionner dans au moins un mode de fonctionnement principal et dans un mode de service dans lequel au moins une fonction de service (71) qui n'est pas disponible dans le mode de fonctionnement principal est fournie à un utilisateur de l'appareil ménager (100),
**caractérisé en ce que** le contrôleur (40) est configuré :
- lorsque l'appareil ménager (100) est dans un état allumé, pour faire fonctionner l'appareil ménager (100) dans le mode de service à la réception depuis l'unité d'entrée (30) d'une entrée utilisateur qui correspond à l'actionnement d'un ou plusieurs éléments d'entrée (31, 32, 33, 34) selon une première séquence d'entrée prédéterminée, où la première séquence d'entrée prédéterminée comprend un actionnement du bouton de mise hors tension (34) ;
- lorsque l'appareil ménager (100) est à l'état allumé, pour éteindre l'appareil ménager (100) à la réception depuis l'unité d'entrée (30) d'une entrée utilisateur qui correspond à l'actionnement du bouton de mise hors tension (34) si ledit actionnement ne respecte pas la première séquence d'entrée prédéterminée.

2. Appareil ménager selon la revendication 1, dans lequel la première séquence d'entrée prédéterminée comprend l'actionnement du bouton de mise hors tension (34) dans un intervalle de temps prédéterminé après que l'appareil ménager (100) a été mis en marche.

3. Appareil ménager selon la revendication 1 ou la revendication 2, dans lequel le contrôleur est en outre configuré pour mesurer le temps qui s'est écoulé depuis que l'appareil ménager (100) a été mis en marche, et pour ne pas éteindre l'appareil ménager (100) si une entrée utilisateur qui correspond à l'actionnement du bouton de mise hors tension (34) est reçue depuis l'unité d'entrée dans un intervalle de temps prédéterminé après que l'appareil ménager (100) a été mis en marche.

4. Appareil ménager selon l'une quelconque des revendications précédentes, dans lequel l'unité d'entrée comprend un écran tactile (31), où le contrôleur (40) est configuré pour fournir des éléments d'entrée sous la forme d'éléments d'entrée graphiques (36) sur l'écran tactile (31) pour un actionnement par un utilisateur, et où la première séquence d'entrée prédéterminée ne comprend pas l'actionnement d'un tel élément d'entrée graphique (36).

5. Appareil ménager selon l'une quelconque des revendications précédentes, dans lequel le bouton de mise hors tension (34) est un bouton marche-arrêt, où l'appareil ménager (100) est configuré, lorsqu'il est à l'état éteint, pour être mis en marche lors de l'actionnement du bouton marche-arrêt.

6. Appareil ménager selon l'une quelconque des revendications précédentes, dans lequel la première séquence d'entrée prédéterminée comprend ou consiste en une pression sur le bouton de mise hors tension (34) pendant une durée prédéterminée, un actionnement répété du bouton de mise hors tension (34) selon une séquence prédéterminée et/ou l'actionnement d'au moins un autre élément d'entrée physique (32, 33) de l'unité d'entrée (30) .

7. Appareil ménager selon la revendication 6, dans lequel la première séquence d'entrée prédéterminée comprend de presser le bouton de mise hors tension (34) pendant la durée prédéterminée dans un intervalle de temps prédéterminé après que l'appareil ménager (100) a été mis en marche, ou l'actionnement répété du bouton de mise hors tension (34) selon la séquence prédéterminée dans un intervalle de temps prédéterminé après que l'appareil ménager (100) a été mis en marche.

8. Appareil ménager selon la revendication 6 ou la revendication 7, dans lequel l'au moins un autre élément d'entrée physique (32, 33) comprend au moins un bouton parmi un bouton rotatif (32) et un bouton de démarrage (33) de l'unité d'entrée (30).

9. Appareil ménager selon l'une quelconque des revendications précédentes, dans lequel la première séquence d'entrée prédéterminée comprend ou est constituée d'au moins une des séquences suivantes : une pression sur le bouton de mise hors tension (34) en combinaison avec un autre bouton (33) de l'unité d'entrée (30) ; une pression sur le bouton de mise hors tension (34) lorsqu'un bouton rotatif (32) de l'unité d'entrée (30) est dans une position prédéterminée ; une pression sur le bouton de mise hors tension (34) et un autre bouton (33) de l'unité d'entrée (30) dans une séquence prédéterminée ; ou une combinaison de telles séquences.

10. Appareil ménager selon l'une quelconque des revendications précédentes, dans lequel l'unité d'entrée (30) comprend un écran tactile (31), où le contrôleur (40) est configuré pour fournir des éléments d'entrée sous la forme d'éléments d'entrée graphiques (36) sur l'écran tactile (31) pour un actionnement par un utilisateur, et où le contrôleur (40) est en outre configuré pour faire fonctionner l'appareil ménager (100) dans le mode de service à la réception depuis l'unité d'entrée (30) d'une entrée utilisateur qui correspond à l'actionnement d'un ou plusieurs éléments d'entrée (31, 32, 33, 34, 36) selon une deuxième séquence d'entrée prédéterminée, où la deuxième séquence d'entrée prédéterminée comprend un actionnement d'un ou plusieurs desdits éléments d'entrée graphiques (36).

11. Appareil ménager selon la revendication 10, dans lequel la deuxième séquence d'entrée prédéterminée consiste en l'actionnement de plusieurs éléments de commande graphiques (36) dans la séquence respective.

12. Appareil ménager selon la revendication 10 ou la revendication 11, dans lequel la deuxième séquence d'entrée prédéterminée comprend ou consiste en l'actionnement d'une séquence d'éléments d'entrée graphiques (36) correspondant chacun à un symbole, où la séquence comprend de préférence au moins trois, au moins quatre ou au moins cinq symboles.

13. Appareil ménager selon l'une quelconque des revendications 10 à 12, dans lequel le contrôleur (40) est en outre configuré pour fournir, dans le mode de fonctionnement principal sur l'écran tactile (31), une structure de menu comprenant des éléments de menu qui peuvent être sélectionnés au moyen d'éléments d'entrée graphiques respectifs (36), où la structure de menu comprend un élément de menu (51), lors la sélection duquel le contrôleur (40) demande à un utilisateur de l'appareil ménager (100) d'entrer la deuxième séquence d'entrée prédéterminée au moyen de l'écran tactile (31).

14. Procédé pour faire fonctionner un appareil ménager, dans lequel l'appareil ménager (100) comprend un contrôleur (40) pour commander le fonctionnement de l'appareil ménager (100) et une unité d'entrée (30) fournissant des éléments d'entrée (31, 32, 33, 34) qui peuvent être actionnés par un utilisateur de l'appareil ménager (100), où les éléments d'entrée comprennent au moins un bouton de mise hors tension (34) qui est mis en œuvre en tant qu'élément d'entrée physique et où l'unité d'entrée (30) est couplée au contrôleur (40), où le procédé comprend l'étape suivante :
- mettre en marche l'appareil ménager (100) ;
**caractérisé en ce que** le procédé comprend en outre les étapes suivantes :
- à la réception depuis l'unité d'entrée (30) d'une entrée utilisateur qui correspond à l'actionnement d'un ou plusieurs éléments d'entrée (31, 32, 33, 34) selon une première séquence d'entrée prédéterminée, faire fonctionner l'appareil ménager (100) dans un mode de service dans lequel au moins une fonction de service (71) qui n'est pas disponible dans un mode de fonctionnement principal est fournie à un utilisateur de l'appareil ménager (100), où la première séquence d'entrée prédéterminée comprend un actionnement du bouton de mise hors tension (34) ;
- si aucune entrée utilisateur correspondant à l'actionnement d'un ou plusieurs éléments d'entrée (31, 32, 33, 34) selon la première séquence d'entrée prédéterminée n'est reçue, faire fonctionner l'appareil ménager (100) dans le mode de fonctionnement principal ; et
- à la réception depuis l'unité d'entrée (30) d'une entrée utilisateur correspondant à l'actionnement du bouton de mise hors tension (34), éteindre l'appareil ménager si ledit actionnement du bouton de mise hors tension (34) ne respecte pas la première séquence d'entrée prédéterminée.

15. Procédé selon la revendication 14, dans lequel le procédé est exécuté par un appareil ménager configuré selon l'une quelconque des revendications 1 à 13.
